# EUROPEAN PATENT APPLICATION

(11) **EP 1 647 805 A1**
(43) Date of publication of application: **19.04.2006**
(21) Application number: 05109548.7
(22) Date of filing: 13.10.2005
(51) Int. Cl.: G01C 21/26

(54) **Distributed on-board telematic system for a motor vehicle**

(30) Priority: 18.10.2004 IT TO20040131
(71) Applicant: MAGNETI MARELLI SISTEMI ELETTRONICI S.p.A., 20011 Corbetta (Milano) (IT)
(72) Inventor: TIMOSSI, Gian Maria, I-29100, PIACENZA (IT)
(74) Representative: Deambrogi, Edgardo

(57) **Abstract**

An on-board telematic system for a motor vehicle is described, comprising a unit (24) for locating the geographical position of the vehicle and at least one unit (20, 22) for managing control functions of the vehicle by using the position information, in which these units (20, 22; 24) are made in the form of separate units, interconnected by means of a local interconnection network (30) according to the LIN standard.

## Description

The present invention relates to an on-board telematic system for a motor vehicle, and more specifically a telematic system according to the preamble of Claim 1.

The increasing demand for electronic accessories for greater comfort on board and in the driving of motor vehicles has led to the development and introduction of advanced connectivity systems for connecting the individual on-board devices to each other and to external remote devices or portable equipment owned by the occupants.

As a result of the continual innovation in the telecommunications sector and recent developments in electronics, vehicles have now been fitted with on-board communication systems for positioning and navigation, transmission of traffic information, entertainment of the occupants, technical assistance and monitoring of the vehicle.

These systems are connected to corresponding electronic control modules integrated into a small number of units distributed in the architecture of the vehicle. A telematic system in an extended configuration includes, for example:
- a radio unit for receiving signals transmitted by radio stations, in analogue or digital technology;
- a satellite positioning unit for the geographical positioning of the vehicle, using GPS technology for example;
- a navigational aid system, comprising an on-board navigation unit possibly integrated with the radio unit for the interface with the driver;
- a telematic base unit, arranged for data communication with remote devices for off-board navigation, monitoring, diagnosis and/or assistance services - using, for example, a GSM, GPRS, UMTS communication protocol, or via a wireless link to an external communication station, possibly also designed for short-range communication with portable equipment owned by the occupants, using Bluetooth technology for example;
- further electronic devices for managing vehicle control functions, such as an immobilizer device for preventing the starting or driving of the vehicle if a radio-frequency identification signal from an external authentication unit is not received.

The position of the vehicle, supplied with high accuracy by the positioning unit, is a basic element of information for the navigational aid system and the telematic base unit.

Conventionally, the satellite positioning unit including the GPS signal receiver is integrated with the on-board navigation unit or with the telematic base unit.

Unfortunately, this proves to be an excessive constraint, which is unfavourable to the modular development of the on-board telematic system, since it requires the presence of the unit in which the GPS receiver is integrated and therefore, in the final analysis, the installation of the on-board navigation unit or the telematic base unit even when this is not required, with a consequent unavoidable increase in the price to the customer.

The electronic control modules fitted on board a vehicle are interconnected by means of one or more serial communication networks which use specific communication protocols. The configuration accepted as standard in the automotive industry is known by the acronym CAN (Controller Area Network).

The frame format of a signal transmitted over a CAN network is well known to those skilled in the art and will not be described here in detail.

Unfortunately, the CAN communication standard does not allow the transmission of GPS data according to the standard NMEA 0183 protocol (and the high transmission speed version, NMEA 0183-HS).

NMEA is a family of standards (managed by the National Marine Electronics Association) for interfacing between digital equipment, which, although originally intended for interfacing a wide range of marine equipment, has been adopted, in a limited subset of data formats, for data transmission in GPS motor vehicle navigation systems, where it is primarily used for communication from a GPS receiver to a processing unit.

The NMEA standard defines the electrical signals, the data formats, the protocol and the timing of transmission on a serial data bus, typically according to the RS232 standard, but other interface standards are also acceptable, for example for connections using USB ports or Bluetooth. The NMEA standard enables each data bus to be connected to a single transmitting device and multiple receiving devices.

Some GPS receivers are physically interfaced with USB, PCMCIA/CompactFlash, infrared or Bluetooth ports. This enables data to be transmitted via dedicated links and enables them to be shared by a plurality of destination devices provided with various types of connection ports.

However, the NMEA standard does not provide for connection to a CAN network.

There are many other formats for data generated by a GPS receiver; these are generally compressed formats, optimized for transmission protocols not belonging to the NMEA standard. On the other hand, the NMEA format is efficient, easily interpreted and equally easily decoded by the processing software in the destination devices.

The object of the present invention is to provide an expandable architecture for an on-board telematic system which can provide a minimum autonomous configuration including only the on-board navigation unit or only the telematic base unit, while avoiding all the drawbacks of the known art.

A further object of the invention is to enable GPS data to be transmitted and shared in an on-board telematic system according to the NMEA standard protocol.

Another significant object of the invention is to reduce the costs of developing such a system, particularly the costs of wiring and customization of the system components.

According to the present invention, these objects are achieved by means of a telematic system having the characteristics claimed in Claim 1.

Specific embodiments of the invention are defined in the dependent claims.

Briefly, the present invention is based on the principle of making the on-board navigation unit and the telematic base unit (and any other electronic device for managing the vehicle control functions) independent of the presence of the satellite positioning unit including the GPS receiver, by configuring the on-board telematic system as a distributed system in which the aforesaid units are connected to the GPS receiver via a LIN communication network, in order not to require customized configurations of the GPS receiver for the use of each of the units, while permitting future expansion of the system.

In a preferred embodiment, the positioning unit, which in a conventional system would be fitted in the dashboard where the on-board navigation unit and/or the telematic base unit are housed, is integrated with the corresponding antenna, thus advantageously reducing the costs of fitting and wiring considerably, due to the elimination of the coaxial cable normally required for connecting a GPS antenna to the remote receiver.

Further characteristics and advantages of the invention will be disclosed more fully in the following detailed description of one embodiment of the invention, provided by way of example and without restrictive intent, with reference to the attached drawings, in which:
Figure 1 is a schematic representation of a distributed telematic system according to the invention, in an extended configuration; and
Figures 2a and 2b are schematic representations of two minimum configurations of the distributed telematic system according to the invention.

In the figures, an on-board telematic system for a motor vehicle is generally indicated by the number 10.

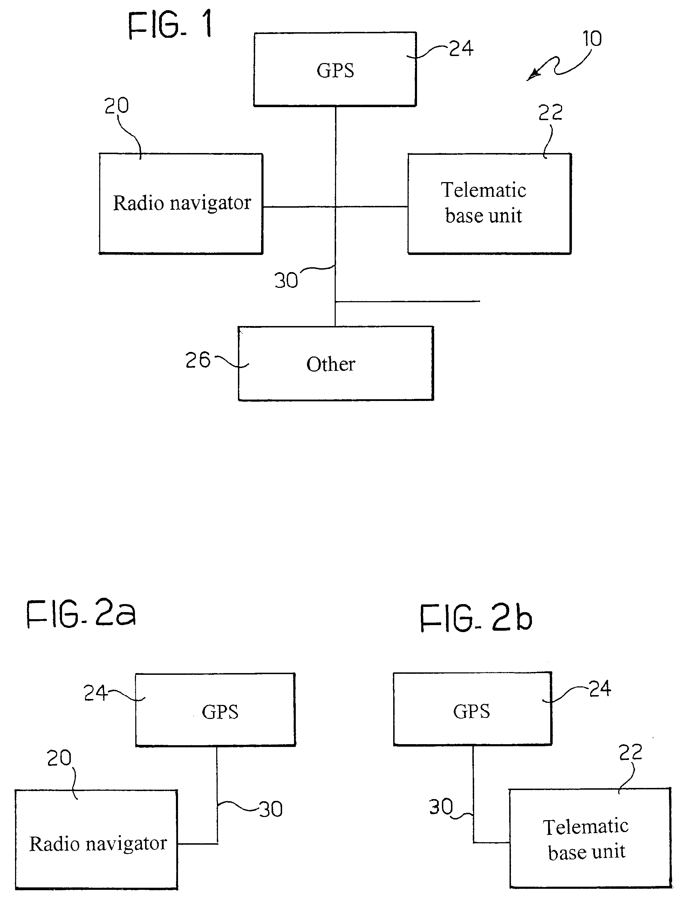

In a currently preferred extended configuration, shown in Figure 1, the system includes:
- a navigational aid system 20 (radio navigator), comprising a navigation unit conveniently integrated with an on-board radio receiver acting as an interface (audio, video, and manual) with the driver;
- a telematic base unit 22, comprising a microprocessor-based processing module for managing voice and data communications, a module for receiving and transmitting digital radio communications according to a GSM/GPRS/UMTS protocol and a module for receiving and transmitting radio frequency communications according to the Bluetooth protocol for short-range wireless communications; and
- a satellite positioning unit 24 for the geographical positioning of the vehicle, comprising for example a receiver operating according to GPS technology, integrated with the corresponding antenna.

The telematic unit 22 is arranged for data communication with remote devices for off-board navigation, monitoring, diagnosis and/or assistance services, for example according to a GSM, GPRS or UMTS communication protocol, or via a wireless link to an external communication station, and for short-range communication with portable equipment owned by the occupants of the vehicle, for example according to Bluetooth technology.

The system also includes other devices for managing vehicle control functions, such as an immobilizer device 26 for preventing the starting or driving of the vehicle if a radio-frequency identification signal, originating from an external authentication unit, is not received.

Figures 2a and 2b show minimum configurations of the system of Figure 1, in which the vehicle is fitted, respectively, with:
- a radio navigator 20 and a separate GPS location unit 24;
- a telematic base unit 22 and a separate GPS location unit 24.

The link between the units of the system is established by means of a local interconnection network 30 according to the LIN (Local Interconnect Network) standard. The LIN physical level consists of a single wire, while the transmission protocol provides for low-speed (20 kbit/s maximum) serial transmission of the master/slave type, in which a single node can act as the master node and there can be up to 16 slave nodes.

The individual units are connected to the LIN network via UART interface devices for asynchronous serial communication.

The LIN network is an open network, and therefore provides for other connections to on-board devices, for example in order to allow a future expansion of the system. This is indicated by the broken line in the figure.

The integration of the GPS receiver and the antenna within the unit 24 makes it possible to dispense with the fitting of additional components which would be necessary for a remote connection between the antenna and the receiver; in other words, it makes it possible to save wiring costs by dispensing with the coaxial cable normally required to connect a GPS antenna to a remote receiver.

Advantageously, the choice of the LIN standard for the communication network between the distributed units makes it possible to minimize the recurrent costs and system development costs, as compared with similar solutions based on CAN networks. This is because the physical level of the LIN standard is currently the simplest type available for automotive applications, and the implementation of a LIN network is therefore more economical than the implementation of a CAN network.

Above all, the LIN network enables GPS signals to be transmitted in NMEA standard format, thus avoiding customized configurations of the GPS receiver (which can be typically interfaced by means of a UART device), so that both the navigation unit and the base unit can use the commercially available processing software developed previously for fully integrated applications.

It should be noted that the embodiment proposed in the preceding discussion is purely exemplary and does not limit the scope of the present invention. A person skilled in the art can easily apply the invention in different embodiments which do not depart from the principles set out above, and which therefore lie within the scope of protection defined by the attached claims.

## Claims

1. On-board telematic system for a motor vehicle, comprising a unit (24) for locating the geographical position of the vehicle and at least one unit (20, 22) for managing control functions of the vehicle by using the position information, **characterized in that** the said units (20, 22; 24) are made in the form of separate units, interconnected by means of a local interconnection network (30) according to the LIN standard.

2. System according to Claim 1, in which an on-board navigation unit (20) is connected to the unit (24) for locating the geographical position of the vehicle by means of the LIN local interconnection network (30).

3. System according to Claim 1, in which an on-board telematic unit (22) for managing communications with remote devices is connected to the unit (24) for locating the geographical position of the vehicle by means of the LIN local interconnection network (30).

4. System according to any one of the preceding claims, in which the unit (24) for locating the geographical position of the vehicle includes a receiver operating according to GPS technology, integrated with the corresponding antenna.

5. System according to Claim 4, in which the unit (24) for locating the geographical position of the vehicle is arranged for the transmission of GPS signals in standard NMEA format.

6. System according to Claim 2, in which the said navigation unit (20) is integrated with an on-board radio receiver acting as an interface (audio, video, manual).

7. System according to Claim 3, in which the said telematic unit (22) comprises a module for receiving and transmitting digital radio communications according to a GSM, GPRS or UMTS communication protocol, or via a wireless link to an external communication station.

8. System according to Claim 3, in which the said telematic unit (22) comprises a module for receiving and transmitting communications according to the Bluetooth protocol for short-range wireless communications.

9. System according to Claim 1, including an immobilizer device (26) for preventing the starting or driving of the vehicle, connected to the LIN local interconnection network (30) .
